Europäisches Patentamt

European Patent Office

Office européen des brevets

(11) Publication number: **0 246 059**
B1

(12) EUROPEAN PATENT SPECIFICATION

(45) Date of publication of the patent specification:
08.08.90

(51) Int. Cl.⁵: **B29C 67/18**, B29C 53/58
// F16C7/00 , B29K105:08

(21) Application number: 87304185.9

(22) Date of filing: 11.05.87

(54) Method of forming a joint between a tubular composite and a metal ring.

(30) Priority: 15.05.86 US 683484

(43) Date of publication of application:
19.11.87 Bulletin 87/47

(45) Publication of the grant of the patent:
08.08.90 Bulletin 90/32

(84) Designated Contracting States:
DE FR GB IT

(56) References cited:
EP-A- 0 029 093
US-A- 3 881 973
US-A- 4 440 587

(73) Proprietor: WESTINGHOUSE ELECTRIC
CORPORATION, Westinghouse Building Gateway
Center, Pittsburgh Pennsylvania 15222(US)

(72) Inventor: Peters, Stanley Thomas, 925 Sladky Avenue,
Mt View, CA 94040(US)
Inventor: Guenther, Rolf Adolf, 17801 Vineland Avenue,
Monte Sereno, CA 95030(US)
Inventor: Marschall, Clarence Frederick,
3326 N. 66 Place, Apt. 2, Scottsdale Arizona 85251(US)
Inventor: Kolek, Robert Louis, 10209 Byerly Court,
Cupertino, CA 95014(US)
Inventor: Anderson, Jeffrey John, 250 Loreto Street,
Scottsdale, Arizona 85251(US)

(74) Representative: van Berlyn, Ronald Gilbert, 23, Centre
Heights, London, NW3 6JG(GB)

## Description

This invention relates to a method of fabricating a joint between a helical wound tubular fibrous composite and a metal ring and more particularly to the self-locking effect between the metal ring and fibrous composite overlay which forces the helical wound fibers to fail before separation of the ring and composite can occur.

Methods of making a joint between a tubular filament wound composite and a metal flange have used a long taper joint as in a clamp joint or various combinations using adhesive bonding or bolted fasteners. With these conventional methods the joint is usually the first area in the structure to fail. Failure may be due to failure of the adhesive or fasteners or due to premature failure of the composite itself because of stress concentrations. Ideally the joint securing arrangement should result in the composite and metal flange acting as one monolithic unit and attaining the full strength capability inherent in the materials used.

United States Patent 4,118,262 describes a method of forming filament wound reinforced tubular composites and how to attach them to rings utilizing pins to transfer the load from the component to the ring. Since the pins are cured into the rigid structure the assembly is rigid and conforms to the shape in which it was cured. Load redistribution in the joint is impaired. Therefore, it is desirable, and it is another object of this invention to provide an arrangement where stress concentrations are minimized and load redistribution is free to occur when local deformation results.

United States Patents 3 881 973 describes a method of holding a fiber wound composite tightly in a concave metal joint by using alternate layers of the normal winding fiber and layers of high carbon steel, E-glass or boron filaments which are heated to increase their length and then wound on alternate layers with a resin to the same diameter as the outer surface. When cooled the filaments shrink to substantially increase the resistance force developed on the joint.

While the method for making conventional joints between tubular filament wound composites and a metal flange have been satisfactory for smaller structures, such arrangements are not completely desirable for large structures subject to relatively large forces both static and dynamic. Due to the multiplicity of operations in the forming of these prior art arrangements, they are both laborious and time-consuming to construct. In addition, the ability of these arrangements to support load is highly dependent upon the ability and consistency of the person forming the joint. Therefore, it is also desirable, and it is still another object of this invention to provide a joint which is capable of high loadings, simple to construct and free of workmanship dependent limitations.

These objects are archieved by a method of forming a composite to metal joint between a metal ring and a tubular composite material formed from continuous strands of high strength fiber wound in criss-crossing helical windings which are bonded by a resinous binder to form the tubular composite structure, which is characterized by:

winding the fiber on a mandrel at a helical angle equal to or greater than the slip angle of the fiber, and providing the metal ring with a surface in the form of a hyperboloid of one sheet. The hyperboloidal surface being so proportioned that the winding angle of the fiber on the mandrel and the hyperboloidal surface are equal and the fibers extend in generally straight lines hugging the hyperboloidal surface in the metal ring with substantially no bridging and without slipping.

The objects and advantages of this invention will become more apparent when reading the following detailed description in conjunction with the drawings in which:

Figure 1 is an end view of a composite to metal joint made in accordance with this invention;
Figure 2 is a partial sectional view taken on line II-II of Figure 1;
Figure 3 is a large partial sectional view of the shape of the surface in Figure 2;
Figure 4 is a partial sectional view of an alternative embodiment of this invention;
Figure 5 is an isometric view of a hyperboloid of one sheet;
Figure 6 is a schematic view of a portion of an isotensoid curve utilized to generate an isotensoid dome.
Figure 7 is a schematic view of a combination of isotensoidal and hyperboloidal curves which may be utilized to form surfaces used in this invention.

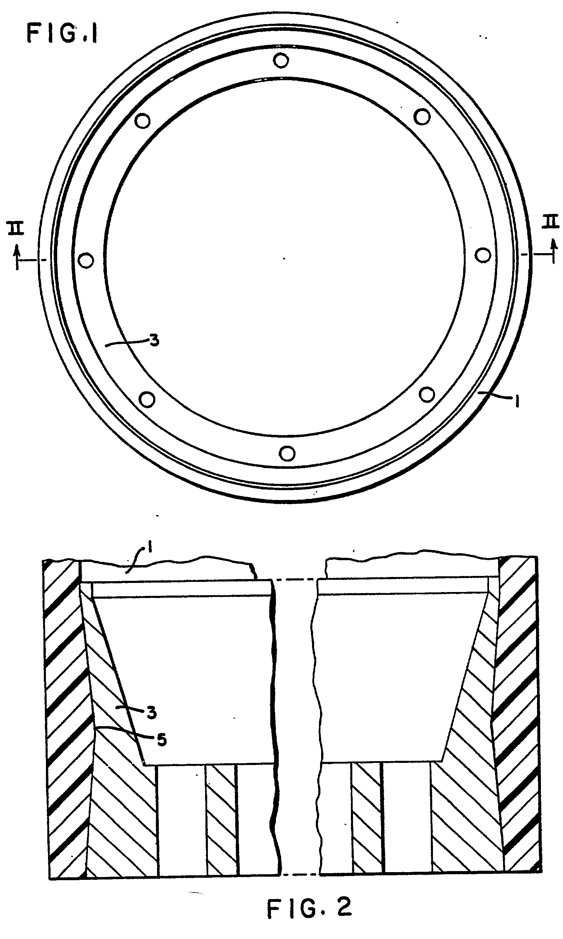

The method of forming a composite to metal joint will be more easily understood by referring to Figures 1 and 2 in which there is shown a juncture between a filament wound composite tube 1 and a metal flange or ring 3. The filament wound composite tube 1 is formed on a mandrel (not shown) which supports the composite tube and the flange. The filament strands of fiber are wound on the mandrel having pins or other means for reversing the windings on each end of the mandrel and the reversing means are so disposed that the windings form an angle of plus or minus ρ (in the order of plus or minus 20 degrees) with respect to a longitudinal line along the surface of the tube generally parallel to the center line, whereby the fibers form criss-crossing helical spirals. The fiber strands pass through a trough (not shown) filled with a bonding resin before being wound on the mandrel and when the resin is cured forms a tubular composite having high tensile and shear strength with reasonable compressive strength. The ends where the fibers turn are usually machined off so that the helical criss-crossing fibers have the same pattern throughout the length of the tubular member. An adhesive bonding material is placed on the metal flange to form a bond between the flange and the composite tube as the composite tube is wound over the metal ring or flange.

The ring 3 is formed with a hyperboloid surface of one sheet 5, a surface of revolution generated by a straight line L, rotated about the axis of the ring. The straight line L neither intersects the axis nor is it parallel thereto.

Since the hyperboloid surface of one sheet 5 is generated by a straight line, by generating the surface with a line disposed at an angle $\pm\rho$ with a line parallel to the axis, which is equal to the angle $\pm\rho$ on which the strands of fiber are wound on the mandrel, the strands of fiber hug the hyperboloidal surface 5 without bridging or leaving the surface except where they cross, when they are wound in opposite directions to form the criss-crossing pattern normally utilized in such filament wound composite tubes.

The hyperboloid sheet of one surface 5 can be formed as a concave surface in a ring and as shown in Figure 2. The composite is formed with a convex shape which matches the concave surface in the ring locking the composite tubular member in the metal ring to provide a joint with built-in interference fit which maximizes the shear strength for both compressive and tensile loading.

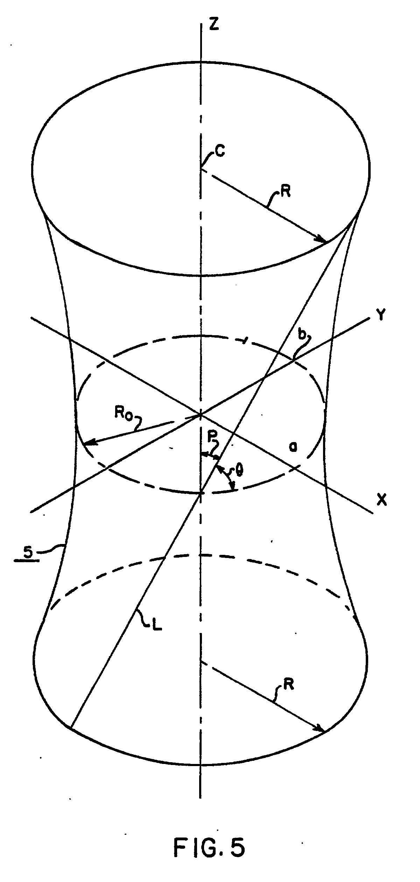

The hyperboloid of one sheet 5 is shown in Figure 5 and is represented by the equation

$$\frac{x^2}{a^2} + \frac{Y^2}{b^2} - \frac{z^2}{c^2} = 1 \tag{1}$$

$$a = b = R_o$$
$$z = \text{Tan } \theta \ y \tag{2}$$
$$\rho = \text{fiber winding angle}$$

$$\theta = \frac{\Pi}{2} - \rho$$

$$\frac{x^2}{R_o^1} + \frac{y^2}{R_o^2} - \frac{z^2}{c^2} = 1 \tag{3}$$

Substituting 2 into 3

$$\frac{x^2}{R_o^2} + \frac{y^2}{R_o^2} - \frac{\text{Tan}^2\theta \ y^2}{c^2} = 1 \tag{4}$$

$$\frac{x^2}{R_o^2} + \left(\frac{1}{R_o^2} - \frac{\text{Tan}^2 \theta}{c^2}\right) y^2 = 1 \tag{5}$$

for the line L to be on the hyperboloid of one sheet then x must be equal to $R_o$ and since Y cannot be at the origin of the axis $Y^2$ 0.

$$\frac{1}{R_o^2} - \frac{Tan^2\,\theta}{c^2} = 0 \qquad\qquad (6)$$

$$c^2 = R_o^2\,Tan^2\,\theta \qquad\qquad (7)$$

substituting 7 into 3

$$\frac{x^2}{R_o^2} = \frac{y^2}{R_o^2} - \frac{z^2}{R_o^2\,Tan^2\,\theta} = 1 \qquad\qquad (8)$$

or

$$x^2 + y^2 - \frac{z^2}{Tan^2\,\theta} = R_o^2 \qquad\qquad (9)$$

Since x and y are 90° angle apart on the circle R:

$X^2 + y^2 = R^2$ (10)

Substituting 10 into 9

$$R^2 - \frac{z^2}{Tan^2\,\theta} = R_o^2 \qquad\qquad (11)$$

Equation 11 provides a relationship between the radius of the smallest diameter portion $R_o$, call the circle of the gorge, the radius of the largest diameter portion, R, Z the height of the hyperboloid from the circle of the gorge to one end and $\theta$ which is 90° minus $\rho$. Utilizing equation 11 one can determine a hyperboloidal surface which will exactly fit a tubular composite having the filament strands wound at an angle $\rho$ on a given diameter mandrel.

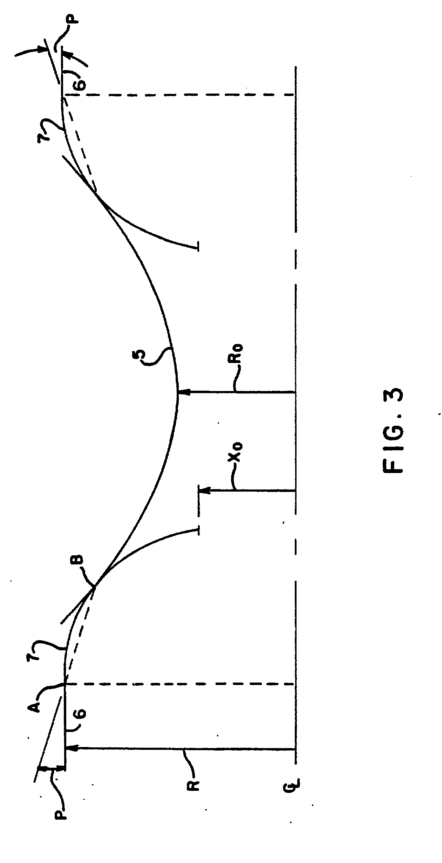

To reduce stress concentrations where the hyperboloidal surface 5 changes to a cylindrical surface 6, generally the surface of the mandrel, a transition surface is utilized. The transition surface is a curved surface of revolution 7 generally formed by rotating a curved line about the axis of the tubular composite. While the curve may be spherical or some other shape, the preferred shape is shown in Figure 3 and is a curve that forms an isotensoid dome. Isotensoidal domes are utilized in pressure vessels formed from spiral wound composite material which result in equal stresses in the crossing strands and provides a lay-up which does not slip. Discussion of isotensoidal domes may be found in the Society of the Plastics Industry, Inc., report given at the eighteenth annual meeting of Reinforced Plastics Division held in Edgewater Beach Hotel, Chicago, in a paper written by John T. Hofeditz entitled "Structural Design Considerations for Fiberglass Pressure Vessels"; the American Rocket Society Space Flight Report to the Nation, presented in the New York Coliseum, October 9 through 15, 1961 in a paper written by John Zickel entitled "Isotensoid Pressure Vessels" and finally in the Plastec Report No. 10, published in 1962 by Shibley, A.; Peritt, H. and Eig, M., pages 169 through 176.

The shape of an isotensoid dome which will register with the tubular and hyperboloidal surfaces can be determined by the equation:

$$Y = \left[ \int_{x_1}^{x_2} \frac{-x^3 \, dx}{\sqrt{\dfrac{x^2 - x_o^2}{1 - X_o^2} - x^6}} \right] + k$$

where $X_o = R \sin \rho$.

$X_o$ = Opening at base of isotensoid dome
$R_1$ Cylinder radius
$\rho$ = Cylinder helix fiber wind angle
$X$ = Radius of isotensoid dome corresponding to:
$Y$ = Lateral displacement along dome centerline.
$k$ = constant.
The lower integration limit for X is

$$\frac{1}{R} \, X_o \, \sqrt{3/2}.$$

The upper integration limit for X is

$$\frac{1}{R} \, X_o \, \sqrt{3/2} < X < 1.00.$$

As shown in Figure 3 by utilizing an isotensoidal and hyperboloidal surfaces 5 and 7 transitions can be made with cylindrical surface 6 and the angle at which the fiber is wrapped can be maintained throughout the winding operation and there will be no bridging or slipping of the fiber strands as the fiber progresses from one surface to the other.

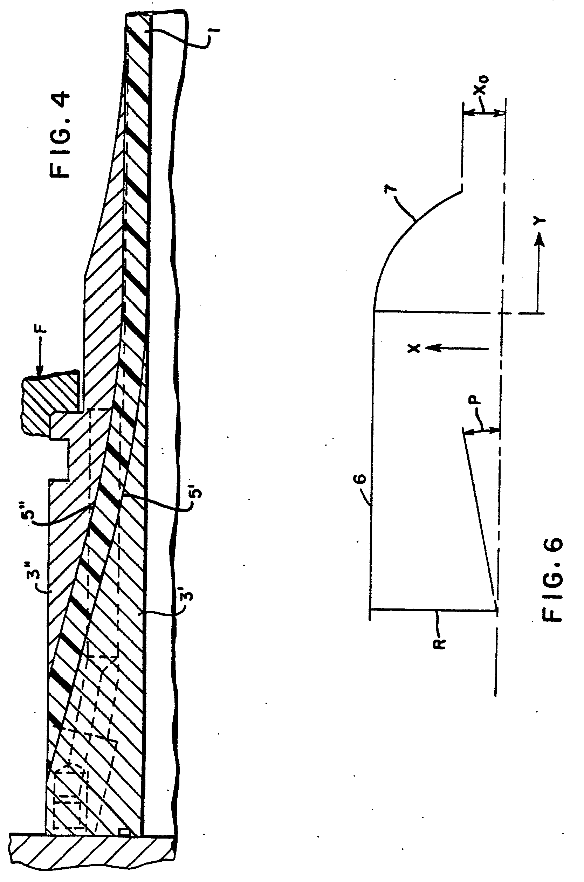

Figure 4 shows a tubular composite 1 having an end wound on a hyperboloidal surface 5' on a ring 3' and clamped by another hyperboloidal surface 5" on a ring 3" when a force F is applied to the ring 3".

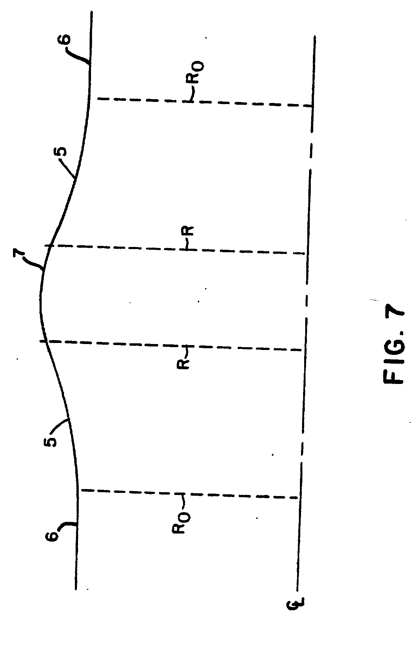

Figure 7 shows a combination of isotensoidal and hyperboloidal curves 5 and 7 which could be utilized to form surfaces of revolutions on metal rings which are joined to tubular composites.

Utilizing the method of forming helical wound composite tubes joined to metal rings having hyperboloidal and isotensoidal surfaces 5 and 7 in accordance with the equations set forth hereinbefore provides joints which are simple to build, which are fail-safe, which require less labor to make a more reliable joint in which the strands do not bridge or slip with respect to these surfaces and the shear strength of the joint is maximized for both tensile and compressing loading, and provides a joint that may have the adhesive bond between the composite and the metal ring fail, but the joint will not fail catastrophically unless the composite itself fails, that is, it will not come apart even if the bonded joint fails until the composite fails as there is an interference fit between the metal ring 3 and the composite tube 1.

## Claims

1. A method of making a composite to metal joint between a metal ring and a tubular composite material formed from continuous strands of high strength fibers wound in crossing helical windings which are bonded by a resinous binder to form the tubular composite structure, the method characterized by the steps of:
   — winding the fiber on a tubular mandrel at a helical angle ($\rho$) equal to or greater than the slip angle of the fiber, and
   — providing the metal ring (3) which fits on the mandrel and has a surface (5) in the form of a hyperboloid of one sheet, said surface (5) being so proportioned that the winding angle ($\rho$) of the fiber on the hyperboloidal surface (5) and on the tubular mandrel are congruent and the fibers extend from the tubular mandrel straight lines over the hyperboloidal surface (5) hugging the hyperboloidal surface (5) in the metal ring (3) with no bridging.

2. The method as set forth in claim 1 characterized by the step of providing a curved surface of revolution (7) in the metal ring contiguous with the hyperboloidal surface (5) forming a smooth transition from the tubular portion to the hyperboloidal portion of the composite.

3. The method as set forth in claim 2 characterized by forming the curve surface of revolution (7) as an isotensoidal surface (7).

4. The method as set forth in claim 1 characterized by forming a curved surface of revolution (7) on the metal ring contiguous with each end of the hyper-boloidal surface (5).

5. The method as set forth in claim 1 characterized by forming a second hyperboloidal surface (5) similar to the first hyperboloidal surface (5) and forming a curved surface of revolution (7) on the metal ring disposed between and contiguous with the two hyperboloidal surfaces.

6. The method as set forth in claim 5 characterized by forming the curved surface of revolution (7) as an isotensoidal surface (7).

7. The method as set forth in claim 3 and further characterized by providing the isotensoidal surface (7) with a curved defined by the formula

$$Y = \left[ \int_{x_1}^{x_2} \frac{- x^3 \ dx}{\sqrt{\dfrac{x^2 - x_o^2}{1 - x_o^2} - x^6}} \right] + k$$

8. The method as set forth in claim 1 characterized by establishing a relationship between the cylindrical surface of the mandrel on which the tubular composite is formed and the hyperboloidal surface (5) of the metal ring defined by the formula

$$R^2 - \frac{z^2}{Tan^2 \theta} = R_{.o}^2$$

## Revendications

1. Méthode de réalisation d'un joint composite-métal entre une bague métallique et une matière composite tubulaire constituée à partir de brins continus de fibres de grande résistance enroulées de manière à former des enroulements hélicoïdaux croisés qui sont liés par un liant résineux pour former la structure composite tubulaire, ladite méthode étant caractérisée par les étapes consistant à:

— enrouler la fibre sur un mandrin tubulaire suivant un un angle hélicoïdal ($\rho$) égal ou supérieur à l'angle de glissement de la fibre, et

— fournir la bague métallique (3) qui s'adapte sur le mandrin et qui présente une surface (5) ayant la forme d'un hyperboloïde réalisée en une seule feuille, ladite surface (5) étant proportionnée de sorte que les angles d'enroulement ($\rho$) de la fibre sur la surface en forme d'hyperboloïde (5) et sur le mandrin tubulaire soient congruents et que les fibres s'étendent en lignes droites à partir du mandrin tubulaire sur la surface (5) en forme d'hyperboloïde en serrant la surface (5) en forme d'hyperboloïde de la bague métallique (3) sans pontage.

2. Méthode telle que décrite dans la revendication 1, caractérisée par l'étape consistant à prévoir une surface de révolution courbe (7) dans la bague métallique contiguë à la surface (5) en forme d'hyperboloïde constituant une transition régulière de la partie tubulaire à la partie en forme d'hyperboloïde de la matière composite.

3. Méthode telle que décrite dans la revendication 2, caractérisée par le fait que la surface de révolution courbe (7) est réalisée sous la forme d'une surface isotensoïdale (7).

4. Méthode telle que décrite dans la revendication 1 caractérisée par le fait qu'une surface de révolution courbe (7) est formée sur la bague métallique de façon à être contiguë à chaque extrémité de la surface (5) en forme d'hyperboloïde.

5. Méthode telle que décrite dans la revendication 1, caractérisée par le fait qu'une seconde surface (5) en forme d'hyperboloïde est formée de manière à être semblable à la première surface (5) en forme d'hyperboloïde et qu'une surface de révolution courbe (7) est formée sur la bague métallique de manière à être disposée entre les deux surfaces en forme d'hyperboloïde et à être contiguë à celles-ci.

6. Méthode telle que décrite dans la revendication 5, caractérisée par le fait que la surface de révolution courbe (7) est réalisée sous la forme d'une surface isotensoïdale (7).

7. Méthode telle que décrite dans la revendication 3 et caractérisée en outre en ce que la surface isotensoïdale (7) présente une courbe définie par la formule suivante:

$$Y = \left[ \int_{x_1}^{x_2} \frac{-x^3 \, dx}{\sqrt{\dfrac{x^2 - x_o^2}{1 - X_o^2} - x^6}} \right] + k$$

8. Méthode telle que décrite dans la revendication 1, caractérisée par le fait qu'une relation est établie entre la surface cylindrique du mandrin sur lequel la matière composite tubulaire est formée et la surface (5) en forme d'hyperboloïde de la bague métallique définie par la formule suivante :

$$R^2 - \frac{z^2}{Tan^2 \theta} = R_o^2$$

## Patentansprüche

1. Verfahren zur Herstellung einer Metall-Verbundwerkstoff-Verbindung zwischen einem Metallring und einem schlauchförmigen Verbundwerkstoffmaterial, das aus kontinuierlichen Strängen hochfester Fasern gebildet wird, die, sich überkreuzend, schraubenförmig gewickelt und mit einem Harzbinder verbunden sind, um so die schlauchförmige Verbundwerkstoffstruktur zu bilden, wobei das Verfahren durch die folgenden Schritte gekennzeichnet ist:
   — Wickeln der Faser um einen Schlauchdorn mit einem Steigungswinkel ($\rho$), der gleich oder größer als der Gleitwinkel der Faser ist, und
   — Anordnen des Metallrings (3), der auf den Dorn paßt und eine Oberfläche (5) in der Form eines Hyperboloids einer Folie hat wobei diese Oberfläche (5) so proportioniert ist, daß der Aufwickelwinkel ($\rho$) der Faser auf die Hyperboloidfläche (5) und auf den Schlauchdorn kongruent ist und sich die Fasern von den Geraden des Schlauchdorns über die Hyperboloidfläche (5) erstrecken und ohne Zusammenbacken des Materials dicht an der Hyperboloidfläche (5) im Metallring (3) anliegen.

2. Verfahren gemäß Anspruch 1, dadurch gekennzeichnet, daß im Metallring eine gekrümmte Drehfläche (7) vorgesehen ist, die sich an die Hyperboloidfläche (5) anschmiegt und einen glatten Übergang vom Schlauchteil zum hyperbolischen Teil des Verbundwerkstoffs herstellt.

3. Verfahren gemäß Anspruch 2, dadurch gekennzeichnet, daß die gekrümmte Drehfläche (7) als Isotensoidalfläche (7) ausgebildet ist.

4. Verfahren gemäß Anspruch 1, dadurch gekennzeichnet, daß auf dem Metallring eine gekrümmte Drehfläche (7) ausgebildet ist, die die Enden der Hyperboloidfläche (5) berührt.

5. Verfahren gemäß Anspruch 1, dadurch gekennzeichnet, daß eine zweite, der ersten Hyperboloidfläche (5) ähnliche Hyperboloidfläche (5) ausgebildet ist, die auf dem Metallring eine gekrümmte Drehfläche (7) bildet und, zwischen den beiden Hyperboloidflächen angeordnet, diese berührt.

6. Verfahren gemäß Anspruch 5, dadurch gekennzeichnet, daß die gekrümmte Drehfläche (7) als Isotensoidalfläche (7) ausgebildet ist.

7. Verfahren gemäß Anspruch 3, dadurch gekennzeichnet, daß die Isotensoidalfläche (7) eine Kurve gemäß der folgenden Formel beschreibt

$$Y = \left| \int_{x_1}^{x_2} \frac{-x^3 \, dx}{\sqrt{\frac{x^2 - x_o^2}{1 - x_o^2} - x^6}} \right| + k$$

8. Verfahren gemäß Anspruch 1, dadurch gekennzeichnet, daß ein Verhältnis zwischen der zylindrischen Fläche des Dorns, um den der schlauchförmige Verbundwerkstoff ausgeformt wird, und der hyperboloiden Fläche (5) des Metallrings hergestellt wird, das durch die folgende Formel definiert ist:

$$R^2 - \frac{z^2}{\tan^2 \theta} = R_o^2$$

FIG.1

II

II

3

1

FIG. 2

3

5

1

FIG. 3

EP 0 246 059 B1

FIG. 4

3" 5" F

3' 5' 1

EP 0 246 059 B1

FIG. 6

6

7

R

X

P

$X_0$

Y

FIG. 5

FIG. 7

EP 0 246 059 B1